# EUROPEAN PATENT SPECIFICATION

(11) **EP 3 796 715 B1**
(45) Date of publication and mention of the grant of the patent: **03.11.2021**
(21) Application number: 19198634.8
(22) Date of filing: 20.09.2019
(51) Int. Cl.: H04W 48/18, H04W 88/02, H04W 88/18, H04L 29/06, H04L 12/24

(54) **COMMUNICATION METHOD AND SYSTEM WITH P-CSCF URGENCY TIMER/INDICATION FOR BEARER MODIFICATION**
KOMMUNIKATIONSVERFAHREN UND -SYSTEM MIT P-CSCF-DRINGLICHKEITSTIMER/-INDIKATION ZUR TRÄGERMODIFIZIERUNG
PROCÉDÉ DE COMMUNICATION ET SYSTÈME AVEC TEMPORISATEUR P-CSCF D'URGENCE/INDICATION DE MODIFICATION DE PORTEUSE

(43) Date of publication of application: 24.03.2021
(73) Proprietor: Deutsche Telekom AG, 53113 Bonn (DE)
(72) Inventor: MELANDER, Mari, 53225 Bonn (DE)
(74) Representative: Vossius & Partner Patentanwälte Rechtsanwälte mbB

(56) References cited:
- DEUTSCHE TELEKOM: "Correction to P-CSCF Restoration Procedures", 3GPP DRAFT; C4-192446, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. Reno, US; 20190513 - 20190517 17 May 2019 (2019-05-17), XP051739036, Retrieved from the Internet: URL:http://www.3gpp.org/ftp/tsg%5Fct/WG4%5 Fprotocollars%5Fex%2DCN4/TSGCT4%5F91%5FRen o/Docs/C4%2D192446%2Ezip [retrieved on 2019-05-17]
- DEUTSCHE TELEKOM: "Correction to P-CSCF restoration procedures", 3GPP DRAFT; C1-195023_WAS194197_WAS193643_WAS193125_WA S192071_P-CSCF_REST_CORRECTION, 3RD GENERATION PARTNERSHIP PROJECT (3GPP), MOBILE COMPETENCE CENTRE ; 650, ROUTE DES LUCIOLES ; F-06921 SOPHIA-ANT , vol. CT WG1, no. Wroclaw (Poland); 20190826 - 20190830 29 August 2019 (2019-08-29), XP051759632, Retrieved from the Internet: URL:http://www.3gpp.org/ftp/Meetings_3GPP_ SYNC/CT1/updates/update6/C1-195023.zip [retrieved on 2019-08-29]
- "3rd Generation Partnership Project; Technical Specification Group Core Network and Terminals; IMS Restoration Procedures (Release 16)", 3GPP STANDARD; TECHNICAL SPECIFICATION; 3GPP TS 23.380, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. V16.1.0 18 September 2019 (2019-09-18), pages 1-55, XP051784568, Retrieved from the Internet: URL:ftp://ftp.3gpp.org/Specs/archive/23_se ries/23.380/23380-g10.zip 23380-g10.docx [retrieved on 2019-09-18]
- DEUTSCHE TELEKOM: "Correction to P-CSCF restoration procedures", 3GPP DRAFT; CP-193116, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Portoroz (Slovenia); 20191007 - 20191011 2 December 2019 (2019-12-02), XP051833827, Retrieved from the Internet: URL:https://ftp.3gpp.org/tsg_ct/TSG_CT/TSG C_86_Sitges/Docs/CP-193116.zip 24229_CR6322r7_(Rel-16)_C1-196837.docx [retrieved on 2019-12-02]

## Description

### Field of the invention

The present invention relates to a method for assigning an urgency timer and/or indication for a new Proxy-Call Session Control Function, P-CSCF, address assigned to a User Equipment, UE, in a communication system.

### Background

For IMS based communication, e.g., VoLTE, there exist mechanisms for the network to assign the User Equipment (UE) a new Proxy-Call Session Control Function (P-CSCF) address and to trigger the UE to initiate a new IP Multimedia Subsystem (IMS) registration towards the newly assigned P-CSCF.

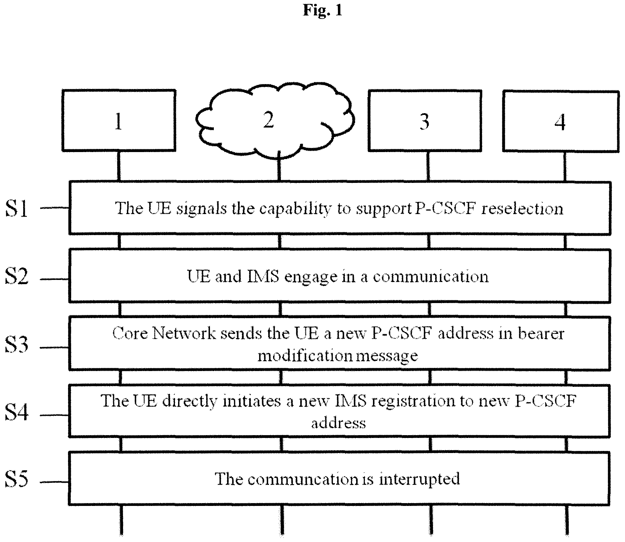

The mechanism used in the state of the art is shown in Fig. 1. The system of Fig. 1 comprises the following entities: a UE 1, a Radio Access Network 2, a Core Network 3, e.g., packet core network, and an IMS 4.

The UE 1 initiates (S1) a registration towards the IMS 4, through the Radio Access Network 2 and the Core Network 3, and engages (S2) into a communication. During the attachment or registration procedure, the UE 1 signals (S1) to the IMS 4 a capability to support P-CSCF reselection. Then, the Core Network 3 sends (S3) the UE a new P-CSCF address in a bearer modification message. Afterwards, the UE 1 directly initiates (S4) a new IMS 4 registration to the new P-CSCF. Finally, the ongoing call interrupts (S5).

According to the state of the art of P-CSCF restoration, there exists a procedure where the UE indicates to the network that it supports the procedure by sending a P-CSCF_RESELECTION_SUPPORT attribute. Depending on the access, it sends this attribute during the attach procedure either as part of the Protocol Configuration Option (PCO) Information Element (IE) (e.g., LTE or trusted WiFi) or by using Internet Key Exchange version 2 (IKEv2) protocol (e.g., untrusted WiFi). The network then sends the new P-CSCF address(es) again in PCO or via IKev2 protocol using the P-CSCF IPv6 Address and P-CSCF IPv6 Address attributes.

3GPP draft C4-192446 and C1-195023 relate to the correction to P-CSCF restoration procedures. 3GPP TS 23.380 standard relates to IMS restoration procedures of Core Network and terminals.

### Technical problem

In the method of Figure 1, the network would change the P-CSCF for maintenance reasons or because the current P-CSCF failed. However, the problem in this mechanism is that it does not give the UE any sense of urgency with regard to how to handle an ongoing call. If the current P-CSCF has failed, then the ongoing call is in an unmanageable state. Thus, in a maintenance scenario, where the state of the art P-CSCF is up and running, the UE finishes the ongoing call first and initiates the new IMS registration.

In view of the above technical problem, the present invention introduces an urgency indication which is signaled to the UE together with the new P-CSCF address. Based on this urgency indication, the UE decides whether it needs to do the new IMS registration directly or after finishing the call. Furthermore, the indication can be extended with a timer, which indicates how long the UE can at most wait. Thus, if the current P-CSCF has failed, the ongoing call that is in an unmanageable state is interrupted and a new IMS registration is initiated directly.

Accordingly, it is an object of the present invention to improve the user experience, so that the calls are not unnecessarily interrupted in the maintenance scenario. The present invention may be used in VoLTE, VoWiFi and 5G voice systems, or any other similar IMS based system.

### Summary of the invention

The above objects are achieved by the features of the independent claims. The invention is defined in the appended claims. Preferred aspects are defined in the dependent claims.

According to a first aspect, the invention provides a communication method in a communication system, wherein the communication system comprises a User Equipment, UE, a Core Network and an IP Multimedia Subsystem, IMS, the method comprising: initiating, from the UE, a registration towards the IMS; engaging in a communication between the UE and the IMS; signaling, from the Core Network to the UE, a P-CSCF address in a bearer modification message, wherein the bearer modification message includes a P-CSCF urgency indication; receiving, at the UE, the P-CSCF address and the P-CSCF urgency indication, wherein if the P-CSCF urgency indication indicates the highest possible urgency, directly initiating, by the UE, a new IMS registration based on the received P-CSCF address and interrupting the communication, wherein if the P-CSCF urgency indication indicates lower urgency and waiting time X, waiting, at the UE, X time for the communication to end and initiating a new IMS registration to the P-CSCF address and interrupting the communication if the communication is still ongoing.

In a preferred embodiment, the UE signals to the Core Network a capability to support a Proxy-Call Session Control Function, P-CSCF, urgency functionality.

In a preferred embodiment, the UE signals to the Core Network the capability to support P-CSCF urgency functionality and/or the P-CSCF urgency indication via a Protocol Configuration Options of a Non-Access Stratum, NAS, message or by using an Internet Key Exchange version 2, IKEv2, protocol.

In a preferred embodiment, the P-CSCF urgency indication includes a timer, preferably with a time value in seconds.

In a preferred embodiment, the highest possible urgency is indicated when the P-CSCF urgency indication equals to 0.

According to another aspect, the invention provides a communication system, wherein the communication system comprises a User Equipment, UE, a Core Network and an IP Multimedia Subsystem, IMS, the system being configured to: initiate, from the UE, a registration towards the IMS; engage in a communication between the UE and the IMS; signal, from the Core Network to the UE, a P-CSCF address in a bearer modification message, wherein the bearer modification message includes a P-CSCF urgency indication; receive, at the UE, the P-CSCF address and the P-CSCF urgency indication, wherein if the P-CSCF urgency indication indicates the highest possible urgency, directly initiate, by the UE, a new IMS registration based on the received P-CSCF address and interrupting the communication, wherein if the P-CSCF urgency indication indicates lower urgency and waiting time X, wait, at the UE, X time for the communication to end and initiate a new IMS registration to the new P-CSCF address and interrupt the communication if the communication is still ongoing.

In a preferred embodiment, the UE is configured to signal to the Core Network a capability to support a Proxy-Call Session Control Function, P-CSCF, urgency functionality.

According to another aspect, the invention provides a User Equipment, UE, configured to: initiate a registration towards an IP Multimedia Subsystem, IMS; engage in a communication with the IMS; receive a P-CSCF address in a bearer modification message, wherein the bearer modification message includes a P-CSCF urgency indication.

In a preferred embodiment, the UE is configured to signal to a Core Network a capability to support a Proxy-Call Session Control Function, P-CSCF, urgency functionality.

According to another aspect, the invention provides a Core Network, configured to: signal to a User Equipment, UE, a P-CSCF address in a bearer modification message, wherein the bearer modification message includes a P-CSCF urgency indication.

In a preferred embodiment, the Core Network is configured to receive a signal from the UE indicating a capability to support a Proxy-Call Session Control Function, P-CSCF, urgency functionality.

In a preferred embodiment, the capability to support P-CSCF urgency functionality and/or the P-CSCF urgency indication is signaled via a Protocol Configuration Options of a Non-Access Stratum, NAS, message or by using an Internet Key Exchange version 2, IKEv2, protocol.

In a preferred embodiment, the P-CSCF urgency indication includes a timer, preferably with a time value in seconds.

In a preferred embodiment the highest possible urgency is indicated when the P-CSCF urgency indication equals to 0.

Other aspects, features, and advantages will be apparent from the summary above, as well as from the description that follows, including the figures and the claims.

### Brief description of the drawings

- FIG. 1: is a flowchart of the existing mechanism for the network to assign the UE a new P-CSCF address and to trigger the UE to initiate a new IMS registration towards the newly assigned P-CSCF according to the state of the art.
- FIG.2: is a flowchart of a mechanism for the network to assign the UE a new P-CSCF address and to trigger the UE to initiate a new IMS registration towards the newly assigned P-CSCF according to the present invention.

### Detailed description of the invention

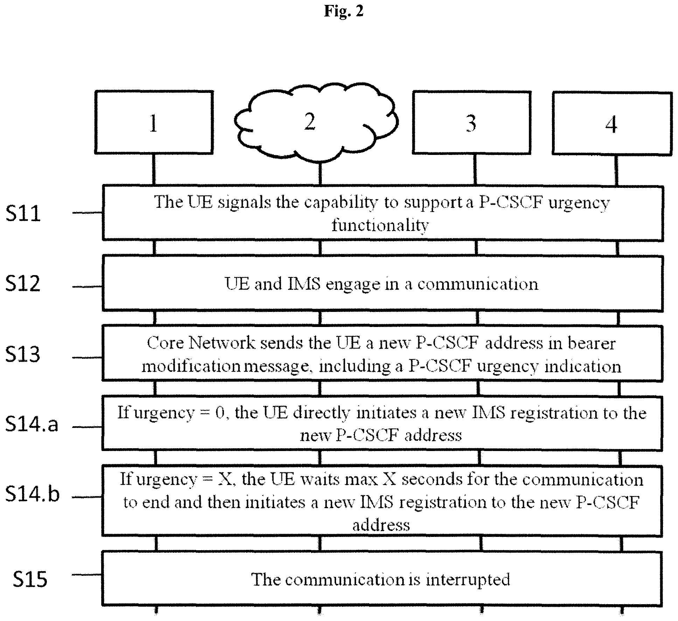

Fig. 2 shows a flowchart of a mechanism for the Core network 3 to assign the UE 1 a new P-CSCF address and to trigger the UE 1 to initiate a new IMS registration towards the newly assigned P-CSCF according to the present invention. The system of Figure 2 comprises the following entities (same as in Figure 1): a UE 1, a Radio Access Network 2, a Core Network 3 and an IMS 4.

At start, the UE 1 initiates (S11) a registration towards the IMS 4, through the Radio Access Network 2 and the Core Network 3, and engages (S12) into a communication. During the attachment or registration procedure (S11), the UE 1 signals to the IMS 4 a capability to support a P-CSCF urgency functionality, i.e. capability to react on the P-CSCF urgency timer/indication. In the present invention, an additional attribute is used to indicate that capability.

Depending on the access, the UE 1 may send this attribute during the attach procedure either as part of the Protocol Configuration Options (PCO), e.g., for LTE or trusted WiFi, or by using IKEv2 protocol, e.g., for untrusted WiFi. Protocol Configuration Options (PCO) is a component of NAS message and this component can be carried by many different messages.

For signaling the P-CSCF urgency timer/indication from the Core Network 3 to the UE 1, an additional attribute is used. Said attribute includes the timer value, e.g. in seconds. This attribute is sent again in PCO or via IKEv2 protocol. Thus, the Core Network 3 sends (S13) the UE 1 a new P-CSCF address in a bearer modification message, wherein the bearer modification message includes the new attribute.

The UE 1 receives this indication and, given that the P-CSCF addresses have changed, applies the urgency when initiating the new IMS registration.

If the P-CSCF urgency indicates the highest possible urgency (S14.a), e.g. P-CSCF urgency = 0, the UE 1 initiates directly a new IMS registration to the new P-CSCF. In this case the ongoing call is interrupted.

Alternatively, if the P-CSCF urgency indicates (S14.b) a time equal to X, for example 600s, then the UE 1 waits for the call to end. However, the UE 1 only waits, at maximum, a time X as indicated by the P-CSCF urgency timer. Then, the UE 1 initiates a new IMS registration to the new P-CSCF.

Here, if the call did not end during the time X, the ongoing call is interrupted (S15) now by the UE 1.

While the invention has been illustrated and described in detail in the drawings and foregoing description, such illustration and description are to be considered illustrative or exemplary and not restrictive.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A communication method in a communication system, wherein the communication system comprises a User Equipment, UE, a Core Network and an IP Multimedia Subsystem, IMS, the method comprising:
initiating (S11), from the UE, a registration towards the IMS via the Core Network, wherein, during the registration, a capability to support a P-CSCF urgency functionality is signaled by the UE;
engaging (S12) in a communication between the UE and the IMS;
signaling (S13), from the Core Network to the UE, in case of a P-CSCF failure or maintenance, a P-CSCF address in a bearer modification message, wherein the bearer modification message includes a P-CSCF urgency indication;
receiving (S14.a, S14.b), at the UE, the P-CSCF address and the P-CSCF urgency indication,
wherein if the P-CSCF urgency indication indicates the highest possible urgency (S14.a), directly initiating, by the UE, a new IMS registration based on the received P-CSCF address and interrupting the communication,
wherein if the P-CSCF urgency indication indicates lower urgency and waiting time X (S14.b), waiting, at the UE, X time for the communication to end and initiating a new IMS registration to the P-CSCF address and
interrupting (S15) the communication if the communication is still ongoing.

2. The method of claim 1, wherein in the initiating step (S11), the UE signals (S11) to the Core Network a capability to support a Proxy-Call Session Control Function, P-CSCF, urgency functionality.

3. The method of claim 2, wherein the UE signals (S11) to the Core Network the capability to support P-CSCF urgency functionality and/or the P-CSCF urgency indication via a Protocol Configuration Options of a Non-Access Stratum, NAS, message or by using an Internet Key Exchange version 2, IKEv2, protocol.

4. The method of any one of claims 1 to 3, wherein the P-CSCF urgency indication includes a timer.

5. The method of any one of claims 1 to 4, wherein the highest possible urgency is indicated when the P-CSCF urgency indication equals to 0.

6. A communication system, wherein the communication system comprises a User Equipment, UE, a Core Network and an IP Multimedia Subsystem, IMS, the system being configured to:
initiate (S11), from the UE, a registration towards the IMS via the Core Network, wherein, during the registration, a capability to support a P-CSCF urgency functionality is signalled by the UE;
engage (S12) in a communication between the UE and the IMS;
signal (S13), from the Core Network to the UE, in case of a P-CSCF failure or maintenance, a P-CSCF address in a bearer modification message, wherein the bearer modification message includes a P-CSCF urgency indication;
receive (S14.a, S14.b), at the UE, the P-CSCF address and the P-CSCF urgency indication,
wherein if the P-CSCF urgency indication indicates the highest possible urgency (S14.a), directly initiate, by the UE, a new IMS registration based on the received P-CSCF address and
interrupt the communication,
wherein if the P-CSCF urgency indication indicates lower urgency and waiting time X (S14.b), wait, at the UE, X time for the communication to end and initiate a new IMS registration to the new P-CSCF address and
interrupt (S15) the communication if the communication is still ongoing.

7. The communication system of claim 6, wherein in the initiation of the registration towards the IMS, the UE is configured to signal (S11) to the Core Network a capability to support a Proxy-Call Session Control Function, P-CSCF, urgency functionality.

8. A User Equipment, UE, configured to:
initiate (S11) a registration towards an IP Multimedia Subsystem, IMS,
via the Core Network, wherein, during the registration, a capability to support a P-CSCF urgency functionality is signalled by the UE;
engage (S12) in a communication with the IMS;
receive (S14.a, S14.b) a P-CSCF address in a bearer modification message, wherein the bearer modification message includes a P-CSCF urgency indication,
wherein if the P-CSCF urgency indication indicates the highest possible urgency (S14.a), directly initiating, by the UE, a new IMS registration based on the received P-CSCF address and interrupting the communication,
wherein if the P-CSCF urgency indication indicates lower urgency and waiting time X (S14.b), waiting, at the UE, X time for the communication to end and initiating a new IMS registration to the P-CSCF address and interrupting (S15) the communication if the communication is still ongoing.

9. The UE of claim 8, wherein the UE is configured to signal (S11) to a Core Network a capability to support a Proxy-Call Session Control Function, P-CSCF, urgency functionality.

10. A Core Network, configured to, in case of a P-CSCF failure or maintenance:
receive (S11), from a UE, in a registration initiated by the UE towards an IP Multimedia Subsystem, IMS, wherein, during the registration, a capability to support a P-CSCF urgency functionality is signalled by the UE;
signal (S13) to a User Equipment, UE, a P-CSCF address in a bearer modification message, wherein the bearer modification message includes a P-CSCF urgency indication, wherein the P-CSCF urgency indication indicates to the UE whether it needs to do a new IMS registration directly or after finishing a communication,
wherein if the P-CSCF urgency indication indicates the highest possible urgency, the UE is configured to initiate (S14a) directly a new IMS registration based on the P-CSCF address and to interrupt an on-going communication andwherein if the P-CSCF urgency indication indicates lower urgency and waiting time X, the UE is configured to wait (S14b) X time for an on-going communication to end and to interrupt (S15) the on-going call if the on-going communication is still ongoing.

11. The communication system of claim 7 or the UE of claim 9 or the Core Network of claim 10, wherein the capability to support P-CSCF urgency functionality and/or the P-CSCF urgency indication is signaled (S11) via a Protocol Configuration Options of a Non-Access Stratum, NAS, message or by using an Internet Key Exchange version 2, IKEv2, protocol.

12. The communication system or the UE or the Core Network of any one of claims 6 to 11, wherein the highest possible urgency is indicated when the P-CSCF urgency indication equals to 0.

13. The method of claim 4 or the communication system of any of claims 6 to 11, wherein the timer is with a time value in seconds.

## Patentansprüche

1. Kommunikationsverfahren in einem Kommunikationssystem, wobei das Kommunikationssystem eine Benutzereinrichtung, UE, ein Kernnetzwerk und ein IP-Multimedia-Subsystem, IMS, aufweist, wobei das Verfahren aufweist:
Initiieren (S11) von der UE einer Registrierung gegenüber dem IMS über das Kernnetzwerk, wobei während der Registrierung eine Fähigkeit zur Unterstützung einer P-CSCF-Dringlichkeitsfunktionalität durch die UE signalisiert wird;
Beteiligen (S12) an einer Kommunikation zwischen der UE und dem IMS;
Signalisieren (S13) vom Kernnetzwerk an die UE, im Fall eines P-CSCF-Fehlers oder einer -Wartung, einer P-CSCF-Adresse in einer Trägermodifikationsnachricht, wobei die Trägermodifikationsnachricht eine P-CSCF-Dringlichkeitsanzeige enthält;
Empfangen (S14.a, S14.b) an der UE der P-CSCF-Adresse und der P-CSCF-Dringlichkeitsanzeige,
wobei, wenn die P-CSCF-Dringlichkeitsanzeige die höchstmögliche Dringlichkeit (S14.a) anzeigt, direktes Initiieren durch die UE einer neuen IMS-Registrierung beruhend auf der empfangenen P-CSCF-Adresse und Unterbrechen der Kommunikation, wobei, wenn die P-CSCF-Dringlichkeitsanzeige eine niedrigere Dringlichkeit und Wartezeit X (S14.b) anzeigt, Warten an der UE eine Zeit X auf das Ende der Kommunikation und Initiieren einer neuen IMS-Registrierung an der P-CSCF-Adresse und
Unterbrechen (S15) der Kommunikation, wenn die Kommunikation noch im Gange ist.

2. Verfahren nach Anspruch 1, wobei im Initiierungsschritt (S11) die UE dem Kernnetz eine Fähigkeit zur Unterstützung einer Proxy-Anrufsitzungssteuerungsfunktion, P-CSCF, Dringlichkeitsfunktionalität signalisiert (S11).

3. Verfahren nach Anspruch 2, wobei die UE dem Kernnetzwerk die Fähigkeit zur Unterstützung einer P-CSCF-Dringlichkeitsfunktionalität und/oder der P-CSCF-Dringlichkeitsanzeige über eine Protokollkonfigurationsoption einer Nichtzugriffsschicht, NAS, Nachricht oder unter Verwendung eine Internet-Schlüsselaustauschversion 2, IKEv2, Protokoll signalisiert (S11).

4. Verfahren nach einem der Ansprüche 1 bis 3, wobei die P-CSCF-Dringlichkeitsanzeige einen Zeitgeber aufweist.

5. Verfahren nach einem der Ansprüche 1 bis 4, wobei die höchstmögliche Dringlichkeit angezeigt wird, wenn die P-CSCF-Dringlichkeitsanzeige gleich 0 ist.

6. Kommunikationssystem, wobei das Kommunikationssystem eine Benutzereinrichtung, UE, ein Kernnetzwerk und ein IP-Multimedia-Subsystem , IMS, aufweist, wobei das System konfiguriert ist:
von der UE eine Registrierung gegenüber dem IMS über das Kernnetzwerk zu initiieren (S11), wobei während der Registrierung eine Fähigkeit zur Unterstützung einer P-CSCF-Dringlichkeitsfunktionalität durch die UE signalisiert wird;
sich an einer Kommunikation zwischen der UE und dem IMS zu beteiligen (S12);
im Fall eines P-CSCF-Fehlers oder einer -Wartung, vom Kernnetzwerk an die UE eine P-CSCF-Adresse in einer Trägermodifikationsnachricht zu signalisieren (S13), wobei die Trägermodifikationsnachricht eine P-CSCF-Dringlichkeitsanzeige enthält;
an der UE die P-CSCF-Adresse und die P-CSCF-Dringlichkeitsanzeige zu empfangen (S14.a, S14.b),
wobei, wenn die P-CSCF-Dringlichkeitsanzeige die höchstmögliche Dringlichkeit (S14.a) anzeigt, durch die UE direkt eine neue IMS-Registrierung beruhend auf der empfangenen P-CSCF-Adresse zu initiieren und die Kommunikation zu unterbrechen, wobei, wenn die P-CSCF-Dringlichkeitsanzeige eine niedrigere Dringlichkeit und Wartezeit X (S14.b) anzeigt, an der UE eine Zeit X auf das Ende der Kommunikation zu warten und eine neuen IMS-Registrierung an der neuen P-CSCF-Adresse zu initiieren, und
die Kommunikation zu unterbrechen (S15), wenn die Kommunikation noch im Gange ist.

7. Kommunikationssystem nach Anspruch 6, wobei bei der Initiierung der Registrierung gegenüber dem IMS die UE konfiguriert ist, dem Kernnetzwerk eine Fähigkeit zur Unterstützung einer Proxy-Anrufsitzungssteuerungsfunktion, P-CSCF, Dringlichkeitsfunktionalität zu signalisieren (S11).

8. Benutzereinrichtung, UE, die konfiguriert ist:
eine Registrierung gegenüber einem IP-Multimedia-Subsystem, IMS, über das Kernnetzwerk zu initiieren (S11), wobei während der Registrierung eine Fähigkeit zur Unterstützung einer P-CSCF-Dringlichkeitsfunktionalität durch die UE signalisiert wird;
sich an einer Kommunikation mit dem IMS zu beteiligen (S12);
eine P-CSCF-Adresse in einer Trägermodifikationsnachricht zu empfangen (S14.a,
S14.b), wobei die Trägermodifikationsnachricht eine P-CSCF-Dringlichkeitsanzeige enthält,
wobei, wenn die P-CSCF-Dringlichkeitsanzeige eine neue IMS-Registrierung (S14.a) anzeigt, direkt durch die UE eine neue IMS-Registrierung beruhend auf der empfangenen P-CSCF-Adresse zu initiieren und der Kommunikation zu unterbrechen, wobei, wenn die P-CSCF-Dringlichkeitsanzeige eine niedrigere Dringlichkeit und Wartezeit X (S14.b) anzeigt, an der UE eine Zeit X auf das Ende der Kommunikation zu warten und eine neue IMS-Registrierung an der P-CSCF-Adresse zu initiieren und die Kommunikation zu unterbrechen (S15), wenn die Kommunikation noch im Gange ist.

9. UE nach Anspruch 8, wobei die UE konfiguriert ist, einem Kernnetzwerk eine Fähigkeit zur Unterstützung einer Proxy-Anrufsitzungssteuerungsfunktion, P-CSCF, Dringlichkeitsfunktionalität zu signalisieren (S11).

10. Kernnetzwerk, das konfiguriert ist, im Fall eines P-CSCF-Fehlers oder einer -Wartung:
von einer UE eine Registrierung zu empfangen (S11), die durch die UE gegenüber einem IP-Multimedia-Subsystem, IMS, initiiert wird, wobei während der Registrierung eine Fähigkeit zur Unterstützung einer P-CSCF-Dringlichkeitsfunktionalität durch die UE signalisiert wird;
einer Benutzereinrichtung, UE, eine P-CSCF-Adresse in einer Trägermodifikationsnachricht zu signalisieren (S13), wobei die Trägermodifikationsnachricht eine P-CSCF-Dringlichkeitsanzeige enthält, wobei die P-CSCF-Dringlichkeitsanzeige der UE anzeigt, ob sie eine neue IMS-Registrierung direkt oder nach dem Beenden einer Kommunikation ausführen muss,
wobei, wenn die P-CSCF-Dringlichkeitsanzeige die höchstmögliche Dringlichkeit anzeigt, die UE konfiguriert ist, direkt eine neue IMS-Registrierung beruhend auf der P-CSCF-Adresse zu initiieren (S14a) und eine laufende Kommunikation zu unterbrechen, und wobei, wenn die P-CSCF-Dringlichkeitsanzeige eine niedrigere Dringlichkeit und Wartezeit X anzeigt, die UE konfiguriert ist, eine Zeit X auf das Ende einer laufenden Kommunikation zu warten (S14b) und den laufenden Anruf zu unterbrechen (S15), wenn die laufende Kommunikation noch im Gange ist.

11. Kommunikationssystem nach Anspruch 7 oder die UE nach Anspruch 9 oder das Kernnetzwerk nach Anspruch 10, wobei die Fähigkeit zur Unterstützung einer P-CSCF-Dringlichkeitsfunktionalität und/oder der P-CSCF-Dringlichkeitsanzeige über eine Protokollkonfigurationsoption einer Nichtzugriffsschicht, NAS, Nachricht oder unter Verwendung eine Internet-Schlüsselaustauschversion 2, IKEv2, Protokoll signalisiert wird (S11).

12. Kommunikationssystem oder die UE oder das Kernnetzwerk nach einem der Ansprüche 6 bis 11, wobei die höchstmögliche Dringlichkeit angezeigt wird, wenn die P-CSCF-Dringlichkeitsanzeige gleich 0 ist.

13. Verfahren nach Anspruch 4 oder das Kommunikationssystem nach einem der Ansprüche 6 bis 11, wobei der Zeitgeber einen Zeitwert in Sekunden aufweist.

## Revendications

1. Procédé de communication dans un système de communication, où ledit système de communication comprend un équipement utilisateur UE, un réseau principal et un sous-système multimédia IP IMS, ledit procédé comprenant :
le déclenchement (S11) par l'UE d'un enregistrement vers l'IMS via le réseau principal, où, pendant l'enregistrement, une aptitude à assister une fonctionnalité d'urgence P-CSCF est signalée par l'UE;
l'engagement (S12) dans une communication entre l'UE et l'IMS ;
la signalisation (S13) par le réseau principal à l'UE, dans le cas d'une défaillance ou d'une maintenance de la P-CSCF, d'une adresse P-CSCF dans un message de modification de porteuse, ledit message de modification de porteuse comprenant une indication d'urgence P-CSCF ;
la réception (S14.a, S14.b) par l'UE de l'adresse P-CSCF et de l'indication d'urgence P-CSCF,
si l'indication d'urgence P-CSCF indique l'urgence maximale possible (S14.a), le déclenchement direct par l'UE d'un nouvel enregistrement IMS sur la base de l'adresse P-CSCF reçue et l'interruption de la communication,
si l'indication d'urgence P-CSCF indique une urgence moindre et un temps d'attente X (S14.b), l'attente par l'UE pendant le temps X jusqu'à la fin de la communication et le déclenchement d'un nouvel enregistrement IMS vers l'adresse P-CSCF et
l'interruption (S15) de la communication si la communication est toujours en cours.

2. Procédé selon la revendication 1, où, lors de l'étape de déclenchement (S11), l'UE signale (S11) au réseau principal une aptitude à assister une fonctionnalité d'urgence de fonction de commande de session d'appel proxy P-CSCF.

3. Procédé selon la revendication 2, où l'UE signale (S11) au réseau principal l'aptitude à assister une fonctionnalité d'urgence P-CSCF et/ou l'indication d'urgence P-CSCF via des options de configuration de protocole d'un message de strate de non-accès NAS, ou au moyen d'un protocole version 2 d'échange de clés Internet IKEv2.

4. Procédé selon l'une des revendications 1 à 3, où l'indication d'urgence P-CSCF comprend un temporisateur.

5. Procédé selon l'une des revendications 1 à 4, où l'urgence maximale possible est indiquée lorsque l'indication d'urgence P-CSCF est égale à 0.

6. Système de communication, où ledit système de communication comprend un équipement utilisateur UE, un réseau principal et un sous-système multimédia IP IMS, ledit system étant prévu pour :
déclencher (S11) par l'UE un enregistrement vers l'IMS via le réseau principal, où, pendant l'enregistrement, aune aptitude à assister une fonctionnalité d'urgence P-CSCF est signalée par l'UE ;
engager (S12) dans une communication entre l'UE et l'IMS ;
signaler (S13) par le réseau principal à l'UE, dans le cas d'une défaillance ou d'une maintenance de la P-CSCF, une adresse P-CSCF dans un message de modification de porteuse,
ledit message de modification de porteuse comprenant une indication d'urgence P-CSCF ;
recevoir (S14.a, S14.b) par l'UE, l'adresse P-CSCF et l'indication d'urgence P-CSCF,
si l'indication d'urgence P-CSCF indique l'urgence maximale possible (S14.a), déclencher directement par l'UE un nouvel enregistrement IMS sur la base de l' adresse P-CSCF reçue et interrompre la communication,
si l'indication d'urgence P-CSCF indique une urgence moindre et un temps d'attente X (S14.b), attendre sur l'UE la fin de la communication pendant le temps X et déclencher un nouvel enregistrement IMS vers la nouvelle adresse P-CSCF, et
interrompre (S15) la communication si la communication est toujours en cours.

7. Système de communication selon la revendication 6, où, lors du déclenchement de l'enregistrement vers l'IMS, l'UE est prévu pour signaler (S11) au réseau principal une aptitude à assister une fonctionnalité d'urgence de fonction de commande de session d'appel proxy P-CSCF.

8. Equipement utilisateur, UE, prévu pour :
déclencher (S11) un enregistrement vers un sous-système multimédia IP IMS via le réseau principal, où, pendant l'enregistrement, une aptitude à assister une fonctionnalité d'urgence P-CSCF est signalée par l'UE ;
engager (S12) dans une communication avec l'IMS ;
recevoir (S14.a, S14.b) une adresse P-CSCF dans un message de modification de porteuse, ledit message de modification de porteuse comprenant une indication d'urgence P-CSCF,
si l'indication d'urgence P-CSCF indique l'urgence maximale possible (S14.a), déclencher directement par l'UE un nouvel enregistrement IMS sur la base de l'adresse P-CSCF reçue et interrompre la communication,
si l'indication d'urgence P-CSCF indique une urgence moindre et un temps d'attente X (S14.b), attendre sur l'UE la fin de la communication pendant le temps X et déclencher un nouvel enregistrement IMS vers la nouvelle adresse P-CSCF, et
interrompre (S15) la communication si la communication est toujours en cours.

9. UE selon la revendication 8, où ledit UE est prévu pour signaler (S11) à un réseau principal une aptitude à assister une fonctionnalité d'urgence de fonction de commande de session d'appel proxy, P-CSCF.

10. Réseau principal, prévu pour, en cas de défaillance ou de maintenance de la P-CSCF :
recevoir (S11) d'un UE, un enregistrement déclenché par l'UE vers un sous-système multimédia IP IMS, où, pendant l'enregistrement, une aptitude à assister une fonctionnalité d'urgence P-CSCF est signalée par l'UE ;
signaler (S13) à un équipement utilisateur UE, une adresse P-CSCF dans un message de modification de porteuse, ledit message de modification de porteuse comprenant une indication d'urgence P-CSCF,
où l'indication d'urgence P-CSCF indique à l'UE s'il est nécessaire d'effectuer un nouvel enregistrement IMS directement ou à l'issue d'une communication, où, si l'indication d'urgence P-CSCF indique l'urgence maximale possible, l'UE est prévu pour déclencher (S14a) directement un nouvel enregistrement IMS sur la base de l'adresse P-CSCF et pour interrompre une communication en cours, et où, si l'indication d'urgence P-CSCF indique une urgence moindre et un temps d'attente X, l'UE est prévu pour attendre (S14b) la fin d'une communication en cours pendant le temps X et pour interrompre (S15) l'appel en cours si communication est toujours en cours.

11. Système de communication selon la revendication 7 ou UE selon la revendication 9 ou réseau principal selon la revendication 10, où l'aptitude à assister une fonctionnalité d'urgence P-CSCF et/ou l'indication d'urgence P-CSCF sont signalées (S11) via des options de configuration de protocole d'un message de strate de non-accès NAS, ou au moyen d'un protocole version 2 d'échange de clés Internet IKEv2.

12. Système de communication ou UE ou réseau principal selon l'une des revendications 6 à 11, où l'urgence maximale possible est indiquée lorsque l'indication d'urgence P-CSCF est égale à 0.

13. Procédé selon la revendication 4 ou système de communication selon l'une des revendications 6 à 11, où le temporisateur présente une valeur temporelle en secondes.
